# FASCICULE DE BREVET EUROPEEN

(11) **EP 1 161 030 B1**
(45) Date de publication et mention de la délivrance du brevet: **21.11.2012**
(21) Numéro de dépôt: 01401399.9
(22) Date de dépôt: 29.05.2001
(51) Int. Cl.: H04L 12/24

(54) **Procédé d'affichage de données de gestion relatives à un équipement d'un réseau**
Verfahren zur Anzeige von Verwaltungsdaten bezüglich einer Netzwerkeinrichtung
Method for displaying management data relating to network equipment

(30) Priorité: 30.05.2000 FR 0006901
(43) Date de publication de la demande: 05.12.2001
(73) Titulaire: SAGEMCOM BROADBAND SAS, 92500 Rueil Malmaison (FR)
(72) Inventeur: Conil, Françoise, 92500 Rueil Malmaison (FR); Vanecker, Luc, 92500 Rueil Malmaison (FR)
(74) Mandataire: Fruchard, Guy

(56) Documents cités:
- LANDRU J ET AL: "MODULAR OPEN NETWORK AGENT FOR CONTROL OPERATIONS" IEEE NETWORK OPERATIONS AND MANAGEMENT SYMPOSIUM,US,NEW YORK, NY: IEEE, vol. CONF. 10, 15 février 1998 (1998-02-15), pages 600-609, XP000799531 ISBN: 0-7803-4352-2
- PHANOURIOU C ET AL: "Transforming command-line driven systems to Web applications" COMPUTER NETWORKS AND ISDN SYSTEMS,NL,NORTH HOLLAND PUBLISHING. AMSTERDAM, vol. 29, no. 8-13, 1 septembre 1997 (1997-09-01), pages 1497-1505, XP004095344 ISSN: 0169-7552

## Description

La présente invention concerne un procédé d'affichage de données de gestion relatives à un équipement d'un réseau lors d'une requête présentée par un ordinateur individuel connecté au réseau.

On sait qu'un réseau comporte une série de terminaux utilisateurs reliés à au moins un équipement, qu'il s'agisse d'un serveur ou d'un simple routeur, fonctionnant sous le contrôle d'une plate-forme d'administration de réseau qui a généralement pour fonction d'assurer la gestion des incidents, la gestion des configurations, la gestion de la sécurité, la gestion des performances, et la gestion des statistiques. Le protocole d'administration le plus utilisé à l'heure actuelle, dénommé SNMP (abrégé de l'anglais Simple Network Management Protocol), est mis en oeuvre au moyen d'un logiciel d'administration installé sur la plate-forme de supervision dont le rôle est de centraliser sur la plate-forme de supervision toutes les informations de réseau issues des équipements, et d'un programme d'administration et de gestion d'équipement installé sur chaque équipement afin d'échanger des informations de gestion de réseau avec le logiciel d'administration, en particulier pour répondre aux requêtes envoyées par le logiciel d'administration en utilisant les données de compteurs contenues dans une base d'informations de gestion du réseau implantée dans l'équipement.

Afin de mettre à jour les données relatives à chaque équipement, la plate-forme d'administration de réseau envoie de façon cyclique des requêtes auprès des équipements.

Lorsque l'on souhaite avoir des informations sur l'activité d'un équipement, il est donc possible d'interroger l'équipement concerné depuis la plate-forme d'administration ou depuis un terminal d'administration déporté afin d'obtenir la valeur de ses compteurs. Toutefois, l'information ainsi recueillie est statique et ne donne que la valeur des compteurs lors du dernier relevé effectué de sorte que pour obtenir une information dynamique il est nécessaire de procéder à plusieurs interrogations depuis la plate-forme de supervision en espaçant les interrogations de façon suffisante pour que la plate-forme de supervision ait elle-même procédé à une nouvelle interrogation de l'équipement concerné. La fréquence d'obtention des informations relatives à l'équipement concerné est donc d'autant plus faible que le nombre d'équipements du réseau est plus grand. En outre le protocole SNMP ne comprend pas de programme de présentation dynamique des données de gestion de sorte qu'une telle présentation dynamique ne peut pas être réalisée en utilisant le seul protocole d'administration du réseau. Le protocole d'administration SNMP habituellement utilisé ne permet donc que la réalisation de tableaux donnant les valeurs des compteurs associés à l'équipement concerné. Pour disposer de présentations dynamiques il est nécessaire de disposer sur la plate-forme de supervision d'applicatifs additionnels de traitement de ces informations. Le document LANDRU J. et Al., "Modular open network agent for control operations " correspond au préambule de la revendication 1.

Selon l'invention on propose un procédé d'affichage de données de gestion relatives à un équipement d'un réseau lors d'une requête envoyée par un ordinateur individuel connecté à cet équipement, ces données étant contenues dans des compteurs mis à jour de façon périodique dans l'équipement concerné et gérées par un protocole dédié au réseau en relation avec une plate-forme de supervision, ce procédé comportant les étapes : de transférer à chaque mise à jour le contenu des compteurs dans des pages de données établies dans un langage de présentation exploitable par l'ordinateur individuel, de transmettre à l'ordinateur individuel en réponse à l'envoi de la requête une page de présentation établie dans le langage de présentation et associée à un programme d'interrogation et de traitement des pages de données, d'effectuer au moyen de ce programme des interrogations successives de l'équipement concerné par la requête, de transférer à l'ordinateur individuel les pages de données correspondant à chaque interrogation, et de traiter celles-ci dans l'ordinateur individuel.

Il est ainsi possible, au moyen d'un ordinateur individuel standard situé n'importe où dans le réseau et connecté à l'équipement, de recueillir des données à une fréquence indépendante de la fréquence d'interrogation de l'équipement par la plate-forme de supervision.

Selon une version avantageuse de l'invention, le programme d'interrogation et de traitement comprend une mise en oeuvre dynamique des pages de données contenues dans les différents routeurs du réseau. Quel que soit l'ordinateur individuel présentant la requête, il est ainsi possible d'effectuer une représentation graphique des données fournies par l'équipement concerné.

D'autres caractéristiques et avantages de l'invention apparaîtront à la description qui suit d'un mode de mise en oeuvre particulier non limitatif du procédé selon l'invention, en relation avec la figure unique ci-jointe qui est une représentation schématique d'un réseau servant à la mise en oeuvre du procédé selon l'invention.

En référence à la figure, le réseau comporte de façon connue en soi des équipements 1 tels que des serveurs ou de simples routeurs ou commutateurs reliés à une plate-forme de supervision 2 fonctionnant selon un protocole d'administration dédié au réseau, par exemple un protocole SNMP. Chaque équipement 1 comporte des compteurs 3 qui sont mis à jour de façon périodique et sont représentatifs de l'activité au niveau de l'équipement concerné.

Des terminaux d'administration 4 sont reliés aux équipements 1 pour constituer un réseau.

Selon l'invention, les équipements 1 sont configurés pour transférer à chaque mise à jour le contenu des compteurs 3 dans des pages de données 5 établies dans un langage de présentation exploitable par un ordinateur individuel 9. Afin de permettre une mise en oeuvre universelle du procédé selon l'invention, on utilise de préférence à cet effet des outils informatiques accessibles par la majorité des ordinateurs. Dans le mode de mise en oeuvre préféré de l'invention les pages de données sont donc établies selon un langage HTML utilisé dans le protocole de communication Internet et l'équipement 1 est configuré pour assurer une fonction de serveur selon le protocole de communication HTTP utilisé pour Internet.

L'ordinateur individuel 9 est équipé d'un modem ou d'une carte réseau lui permettant de se connecter à l'équipement 1 et s'appuie sur les différentes notions et technologies du réseau Internet qui sont offertes de façon habituelle dans ce type d'ordinateur individuel (navigateur et interpréteur JAVA intégré).

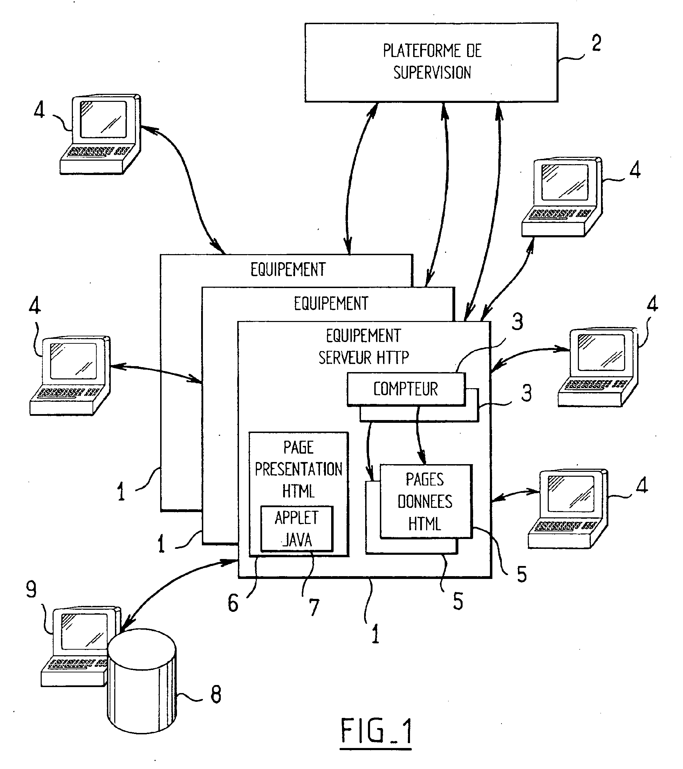

Par ailleurs, une page de présentation HTML 6 est implantée dans les équipements 1 et comporte un programme 7 en langage de JAVA, plus couramment dénommé applet java. L'applet java a pour vocation, lorsqu'il est chargé dans la mémoire 8 de l'ordinateur individuel 9, d'effectuer des interrogations successives de l'équipement 1 concerné par la requête pour transférer dans la mémoire 8 de l'ordinateur individuel 9 les pages de données HTML 5 correspondant à chaque interrogation et de traiter celles-ci dans l'ordinateur individuel 9. A cet effet, lorsqu'une requête sur des données de gestion est présentée par un ordinateur individuel 9 à un équipement 1, la page de présentation HTML 6 et l'applet java qu'elle contient sont téléchargés dans l'ordinateur individuel 9 comme illustré par la flèche en trait épais sur la figure 1. La page de présentation 6 permet à l'opérateur de sélectionner le type de statistiques recherchées et la forme sous laquelle il veut visualiser ces statistiques.

En fonction du choix effectué par l'opérateur de l'ordinateur individuel, l'applet java va chercher dans la partie de l'équipement 1 concerné, configuré en serveur HTTP, les textes descriptifs et les valeurs statistiques correspondantes. Les informations, chargées sur l'ordinateur individuel 9, sont alors consolidées, traitées et affichées graphiquement par l'applet java conformément au choix de l'opérateur, par exemple sous forme de diagramme, d'histogramme ou sous forme d'une représentation graphique d'un disque divisé en secteurs représentatifs du volume de chacune des données.

L'invention est susceptible de variantes de réalisation qui apparaîtront à l'homme de métier sans sortir du cadre de l'invention telle que définie par les revendications. En particulier, bien que le procédé selon l'invention ait été décrit en relation avec une interrogation par un ordinateur individuel 9 différent des terminaux d'administration 4 rattachés à la plate-forme d'administration, on peut également prévoir de mettre en oeuvre le procédé selon l'invention sur les terminaux d'administration 4 du réseau, la fonction d'interrogation étant alors effectuée non pas en utilisant le protocole réseau SNMP, mais en effectuant avec l'équipement concerné pris en tant que serveur HTTP une connexion de type Internet en utilisant un protocole TCP/IP implanté dans le terminal d'administration 4.

## Revendications

1. Procédé d'affichage de données de gestion relatives à un équipement (1) d'un réseau lors d'une requête envoyée par un ordinateur individuel (9) connecté à cet équipement, ces données étant contenues dans des compteurs mis à jour de façon périodique dans l'équipement concerné (1) et gérées par un protocole dédié au réseau en relation avec une plate-forme de supervision (2), **caractérisé en ce qu'**il comporte les étapes : de transférer à chaque mise à jour le contenu des compteurs (3) dans des pages de données (5) établies dans un langage de présentation exploitable par l'ordinateur individuel, de transmettre à l'ordinateur individuel en réponse à l'envoi de la requête une page de présentation (6) établie dans le langage de présentation et associée à un programme (7) d'interrogation et de traitement des pages de données (5), d'effectuer au moyen de ce programme des interrogations successives de l'équipement concerné par la requête, de transférer à l'ordinateur individuel les pages de données (5) correspondant à chaque interrogation, et de traiter celles-ci dans l'ordinateur individuel.

2. Procédé selon la revendication 1, **caractérisé en ce que** le programme (7) d'interrogation et de traitement comprend une mise en oeuvre dynamique des pages de données (5) contenues dans l'ordinateur individuel (9).

## Claims

1. A method of displaying management data relating to a piece of equipment (1) of a network in the event of a request being sent by a personal computer (9) connected to the piece of equipment, the data being contained in counters that are updated periodically in the equipment (1) in question and managed by a protocol dedicated to the network in communication with a supervisory platform (2), the method being **characterized in that** it comprises the following steps: on each updating, transferring the content of the counters (3) into data pages (5) drawn up in a presentation language usable by the personal computer; in response to the request being sent, transmitting to the personal computer a presentation page (6) drawn up in the presentation language and associated with a program (7) for interrogating and processing data pages (5); using this program to perform successive interrogations of the equipment concerned by the request; transferring to the personal computer the data pages (5) corresponding to each interrogation; and processing these pages in the personal computer.

2. A method according to claim 1, **characterized in that** the interrogation and processing program (7) includes dynamically implementing data pages (5) contained in the personal computer (9).

## Patentansprüche

1. Verfahren zum Anzeigen von Verwaltungsdaten bezüglich einer Einrichtung (1) eines Netzwerkes bei einer über einen Personal Computer (9), der mit dieser Einrichtung verbunden ist, verschickten Anfrage, wobei diese Daten in Zählern enthalten sind, die periodisch in der betreffenden Netzwerkeinrichtung (1) aktualisiert und über ein netzwerkspezifisches Protokoll in Zusammenhang mit einer Supervisionsplattform (2) verwaltet werden, **dadurch gekennzeichnet, dass** es die folgenden Schritte umfasst:
bei jeder Aktualisierung den Inhalt der Zähler (3) in Datenseiten (5) zu transferieren, die in einer Präsentationssprache erstellt sind, die durch den Personal Computer auswertbar ist; an den Personal Computer als Antwort auf das Schicken der Anfrage eine Präsentationsseite (6) zu übermitteln, die in der Präsentationssprache erstellt wurde und mit einem Programm (7) zur Abfrage und Verarbeitung der Datenseiten (5) verknüpft ist; mit Hilfe dieses Programmes sukzessive Abfragen der durch die Anfrage betroffenen Einrichtung durchzuführen; an den Personal Computer die Datenseiten (5) zu übermitteln, die jeder Abfrage entsprechen, und diese im Personal Computer zu verarbeiten.

2. Verfahren nach Anspruch 1, **dadurch gekennzeichnet, dass** das Programm (7) zur Abfrage und Verarbeitung eine dynamische Implementierung der im Personal Computer (9) enthaltenen Datenseiten (5) umfasst.
